(19) Europäisches Patentamt

European Patent Office

Office européen des brevets

(11) Numéro de publication: **0 084 472**
**B1**

(12) **FASCICULE DE BREVET EUROPEEN**

(45) Date de publication du fascicule du brevet: **13.11.85**

(51) Int. Cl.⁴: **G 05 G 9/16,** B 60 K 20/12

(21) Numéro de dépôt: **83400028.3**

(22) Date de dépôt: **05.01.83**

(54) Dispositif de commande de boîte de vitesses.

(30) Priorité: **18.01.82 FR 8200660**

(43) Date de publication de la demande:
**27.07.83 Bulletin 83/30**

(45) Mention de la délivrance du brevet:
**13.11.85 Bulletin 85/46**

(84) Etats contractants désignés:
**DE GB IT**

(56) Documents cités:
**FR - A - 2 181 112**
**FR - A - 2 193 450**
**FR - E - 91 733**

(73) Titulaire: **AUTOMOBILES PEUGEOT, 75, avenue de la Grande Armée, F-75116 Paris (FR)**
Titulaire: **AUTOMOBILES CITROEN, 62 Boulevard Victor-Hugo, F-92200 Neuilly-sur-Seine (FR)**

(72) Inventeur: **Villars, François, 11 Rue Richardot, F-25200 Montbellard (FR)**
Inventeur: **Poirier, Daniel, 9 Rue Christophe Colomb, F-78500 Sartrouville (FR)**

(74) Mandataire: **Bressand, Georges et al, c/o CABINET LAVOIX 2 Place d'Estienne d'Orves, F-75441 Paris Cedex 09 (FR)**

## Description

L'invention est relative aux dispositifs de commande de boîte de vitesses pour véhicules automobiles, dispositifs comportant un levier de manoeuvre relativement éloigné de la boîte de vitesses, porté par un palier solidaire de la caisse du véhicule et relié par au moins une tige longitudinale à deux éléments mobiles de la boîte de vitesses sur chacun desquels est articulée une biellette transversale attaquée par un levier de renvoi, de façon que chaque rapport de la boîte de vitesses puisse être sélectionné par le premier élément mobile, puis engagé par le deuxième élément mobile, en basculant le levier de manoeuvre d'abord en direction transversale puis en direction logitudinale, la tige qui actionne le premier élément mobile étant portée par la caisse du véhicule en deux points par l'intermédiaire de moyens de liaison permettant son pivotement autour de son axe et éventuellement son coulissement logitudinal.

Dans ces dispositifs de commande, la tige qui actionne l'élément de sélection est d'une part reliée au levier de manoeuvre par un axe transversal d'articulation, et d'autre part solidaire d'un levier de renvoi sensiblement perpendiculaire à cette tige et à une biellette transversale de sélection que est articulée d'un côté sur l'extrémité du levier de renvoi, et de l'autre côté sur ledit premier élément mobile. Un basculement transversal du levier de manoeuvre provoque ainsi un pivotement de la tige en question autour de son axe, et par suite un déplacement transversal de la biellette de sélection. Mais inversement, lorsque la boîte de vitesses, ou le groupe moto-propulseur auquel appartient cette boîte, se déplace transversalement sur ses supports élastiques, le mouvement transversal de la boîte de vitesses par rapport à la caisse du véhicule provoque un déplacement transversal de la biellette de sélection et, par suite, un basculement transversal du levier de manoeuvre.

Ceci constitue un inconvénient, surtout dans le cas où la position du levier de manoeuvre doit être bien déterminée par rapport à la caisse, notamment lorsqu'est prévue une butée éclipsable entre ce levier et la caisse pour éviter de sélectionner intempestivement la marche arrière. En effet, dans ce cas, si la position du levier de manoeuvre est notablement modifiée par le déplacement transversal de la boîte de vitesses, cette butée éclipsable ne se trouve plus dans sa position relative déterminée entre le levier et la caisse, et par suite la marche arrière risque d'être sélectionnée sans que la butée ait été éclipsée, ou bien celle-ci risque d'empêcher la sélection d'un autre rapport que la marche arrière.

Le but de l'invention est de remédier à cet inconvénient en réalisant un dispositif de commande de changement de vitesse dans lequel la position du levier de manoeuvre ne soit pas sensiblement modifiée, dans le sens de la sélection des rapports, par de légers déplacement transversaux de la boîte de vitesses.

A cet effet, l'invention a pour objet un dispositif de commande du type précité, caractérisé en ce que lesdits moyens de liaison permettent en outre un léger déplacement transversal de ladite tige à son extrémité reliée au levier de renvoi dudit premier élément mobile, et en ce que cette extrémité de la tige est en outre reliée à la boîte de vitesses par un tirant sensiblement parallèle à la biellette de sélection et à peu près de même logueur que celle-ci.

Dans une première disposition, où le dispositif de commande comporte deux tiges longitudinales reliant respectivement le levier de manoeuvre à chacun desdits éléments mobiles, lesdits moyens de liaison comprennent d'une part, de manière connue, un palier souple proche du levier de manoeuvre det des moyens d'arrêt axial de ladite tige, et d'autre part une biellette sensiblement perpendiculaire à cette tige et à la biellette de sélection et articulée d'un côté sur la caisse et de l'autre côté sur la tige en un point éloigné du palier.

Dans une deuxième disposition, où le dispositif de commande comporte deux tiges longitudinales comme dans le cas précédent, lesdits moyens de liaison comprennent un palier souple proche du levier de manoeuvre et une articulation rotulante solidaire de la caisse, la tige qui actionne le premier élément mobile étant formée de deux tronçons s'articulant l'un sur l'autre autour d'un axe sensiblement perpendiculaire à cette tige et à la biellette de sélection.

Dans cette dernière position, l'articulation rotulante est avantageusement constituée d'une rotule solidaire d'un axe d'articulation du levier de renvoi correspondant à l'autre tige, cet axe étant solidaire de la caisse et sensiblement perpendiculaire à la première tige et à la biellette de sélection.

Dans une troisième disposition, à tige longitudinale unique reliée aux deux éléments mobiles par des leviers de renvoi respectifs et par des biellettes transversales respectives, cette tige étant reliée par une articulation rotulante au levier de renvoi du deuxième élément mobile, levier qui est articulé sur un axe solidaire de la caisse et sensiblement perpendiculaire à la tige et aux biellettes, la tige est formée de deux tronçons s'articulant sur l'autre autour d'un axe sensiblement perpendiculaire à la tige et à la biellette de sélection.

Dans les deuxième et troisième dispositions ce-dessus, l'axe d'articulation des deux tronçons de tige est avantageusement coaxial à l'articulation rotulante, celle-ci pouvant notamment être constituée d'une rotule coopérant avec un logement pratiqué dans un tourillon solidaire d'un des tronçons de tige et tournant dans un alésage de l'autre tronçon de tige.

Il est donné ci-après description de trois modes de réalisation de dispositifs de commande de boîte de vitesses selon l'invention, avec référence aux dessins annexés parmi lesquels:

— la Fig. 1 est une vue schématique en perspective d'un premier mode de réalisation;

— la Fig. 2 est une vue analogue d'un autre mode de réalisation;

— la Fig. 3 est une vue détaillée, avec coupe partielle, d'une partie d'un dispositif du type de celui de la Fig. 2; et

— la Fig. 4 est une vue analogue à la Fig. 3 d'un autre mode de réalisation.

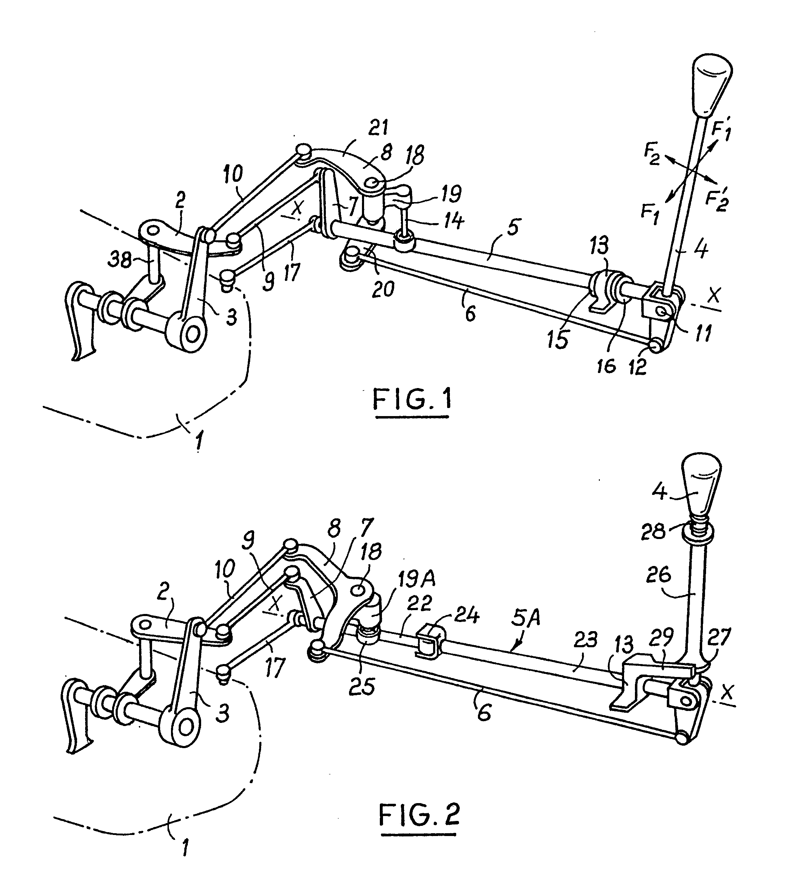

Sur la Fig. 1, on voit un dispositif de commande de la boîte de vitesses 1 d'un véhicule automobile, ce dispositif étant adapté pour déplacer successivement deux éléments mobiles 2, 3 de la boîte de vitesses par des déplacements respectivement transversaux (flèches F1, F'1) et longitudinaux (flèches F2, F'2) d'un levier de manoeuvre 4 sensiblement vertical. La boîte de vitesses 1 appartient par exemple à un groupe moto-propulseur transversal avant monté sur des supports élastiques (non représentés).

Le levier 4 s'articule sur deux tiges longitudinales 5 et 6 respectivement reliées aux éléments mobiles 2 et 3 par un levier de renvoi 7, 8 et par une biellette transversale 9, 10. La liaison entre le levier 4 et la tige 5 s'effectue par un axe transversal 11, et celle entre ce levier et la tige 6 par une rotule 12.

La tige 5, d'axe X-X, est portée par la caisse du véhicule au moyen d'un palier souple 13 proche du levier 4 et au moyen d'une biellette verticale 14 pourvue d'une rotule à chaque extrémité. Ainsi, la tige 5 peut pivoter de 30° environ autour de son axe et de quelques degrés autour d'un axe vertical passant par le centre du palier 13. Des bagues d'appui 15, 16 solidaires de la tige 5 l'immobilisent axialement en butant contre le palier 13.

Le levier 7 est sensiblement perpendiculaire à la biellette 9 dans sa position moyenne et rigidement solidaire de l'extrémité de la tige 5 opposée au levier 4. Cette tige est en outre articulée, à proximité de son axe et du levier 7, à une extrémité d'un tirant constitué d'un biellette transversale 17 dont l'autre extrémité s'articule sur la boîte de vitesses. La biellette 17 est à peu près parallèle aux biellettes 9 et 10 à peu près de même logueur que celles-ci.

Le levier 8 est coudé, et sa partie intermédiaire pivote autour d'un axe 18 vertical porté par un support 19 solidaire de la caisse du véhicule; sur ce support est articulée la biellette 14. L'un, 20, des deux bras du levier 8 est transversal et articulé sur l'extrémité avant de la tige 6; l'autre bras 21 est logitudinal et articulé sur la biellette 10. Les articulations reliant les biellettes ou les tiges aux leviers sont universelles, du type à rotule, hormis celle comportant l'axe 11.

Le dispositif de commande représenté à la Fig. 2 ne diffère de celui de la Fig. 1 que par la constitution et l'articulation de la tige 5A reliant le levier 4 au levier 7. Cette tige 5A comporte ici deux tronçons 22, 23 qui s'articulent entre eux autour d'un axe vertical. Le tronçon avant 22 s'articule par ailleurs sur une rotule 25 fixée au support 19A de l'axe 18 du levier 8, et le tronçon arrière 23 est porté à son extrémité arrière par le palier souple 13. Cependant, les bagues d'appui 15, 16 de la Fig. 1 sont supprimées car l'immobilisation axiale de la tige 5A est assurée par la rotule fixe 25.

La Fig. 2 montre en outre, de manière simplifiée, des moyens de butée éclipsables interdisant le passage intempestif de la marche arrière, moyens qui peuvent être adaptés à la disposition de la Fig. 1: sur le levier 4 peut coulisser un fourreau 26 dont la base élargie forme une collerette 27; un ressort 28 pousse le fourreau vers une position basse dans laquelle la collerette 27 entre en contact avec une butée 29 solidaire de la caisse du véhicule quand le levier 4 est poussé vers sa position de marche arrière. En soulevant le fourreau 26 à l'encontre du ressort 28, la collerette 27 s'écarte de la butée 29, autorisant le basculement du levier 4 jusqu'à sa position de marche arrière.

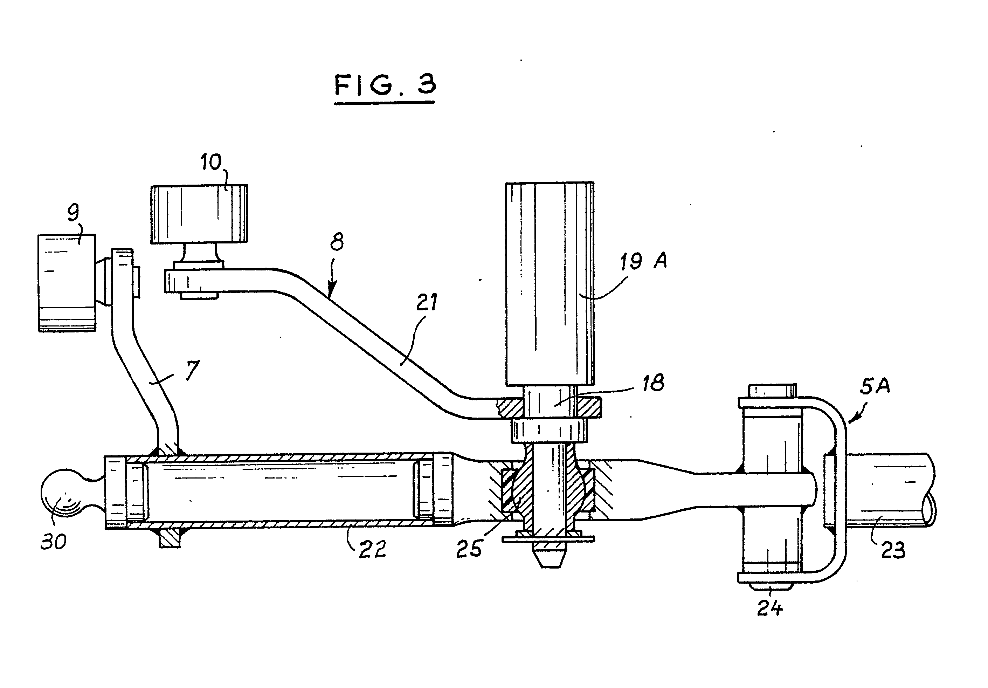

La Fig. 3 montre de manière plus détaillée un mode de réalisation avantageux du tronçon 22 et des pièces voisines: la rotule 25 est ici solidaire de l'axe d'articulation 18 du levier de revoi 8, dont on voit le bras 21 relié à la biellette 10, l'axe 18 pivotant dans le support 19A solidaire de la caisse. La partie avant du tronçon 22 est tubulaire et porte axialement à son extrémité une rotule 30 propre à recevoir la biellette 17.

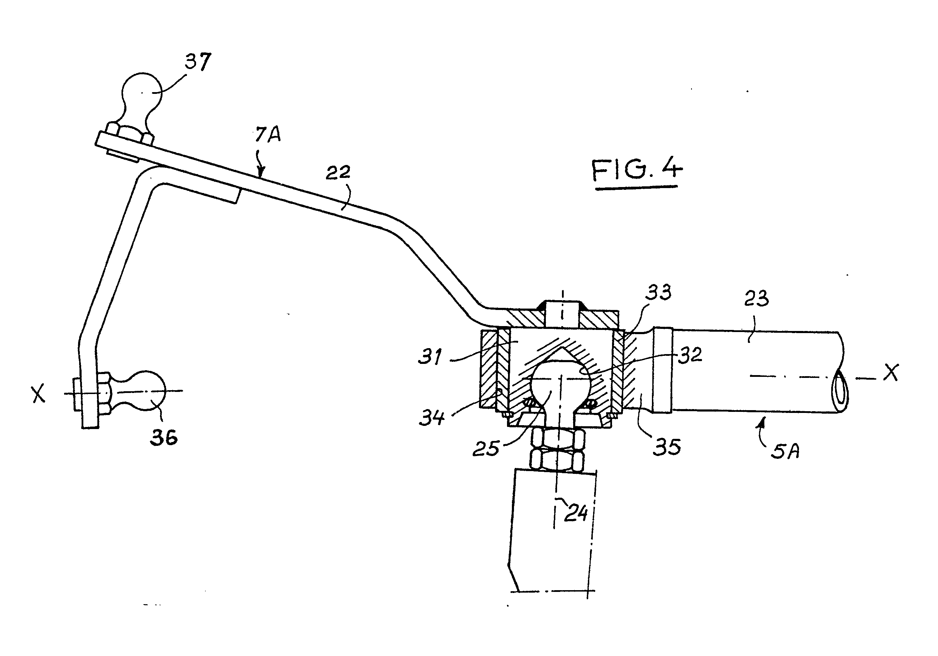

La Fig. 4 montre une autre variante dans laquelle l'axe d'articulation 24 est confondu avec l'axe vertical de la rotule 25. Pour cela, l'articulation 24 est constituée d'un tourillon 31 dont un logement central 32 forme un siège pour la rotule 25 et qui tourne librement, avec interposition d'une bague anti-friction 33, dans un alésage 34 d'un embout 35 du tronçon 23. Le tronçon 22 de la tige 5A, réalisé ici en profilé métallique plié et soudé, est fixé à l'extrémité du tourillon 31 opposée à la rotule 25 et porte des rotules 36 et 37 d'articulation des biellettes 17 et 9 respectivement. Le tronçon 22 constitue ainsi en même temps le levier de sélection 7A reliant la rotule 37 à la tige 5A, l'axe X-X de pivotement du tronçon 23 passant par le centre des rotules 25 et 36 pour retrouver la disposition générale des Fig. 2 et 3.

Le fonctionnement du dispositif de commande est dans l'ensemble classique: un basculement transversal du levier 4 provoque, par rotation de la tige 5 ou 5A autour de son axe X-X, un pivotement de l'élément mobile 2 autour de son axe vertical 38, réalisant la sélection d'un rapport; un basculement logitudinal du levier 4 provoque ensuite un déplacement longitudinal de la tige 6 et, par suite, un déplacement de l'élément mobile 3, réalisant le passage dudit rapport. Les biellettes 9, 10 et 17 étant transversales et de logueurs peu différentes, tout léger déplacement de la boîte de vitesses 1, et plus particulièrement de ses éléments 2, 3, dans une direction perpendiculaire aux biellettes, et notamment en direction verticale ou en direction logitudinale, ne modifie pratiquement pas la position de leviers 7 et 8 ni, par suite, celle des teges 5 ou 5A et 6 et du levier 4.

En outre, grâce à la présence de la biellette 17 et au mode de support de la tige 5 ou 5A, un léger déplacement transversal de la boîte de vitesses 1, ou de sa portion sur laquelle s'articulent les biellettes 9, 10 et 17, provoque un déplacement identique de ces trois biellettes et de l'extrémité avant de la tige 5 ou 5A. Par suite, le levier 7 subit une translation transversale sans pivoter autour de l'axe de la tige 5 ou 5A, donc sans provoquer de basulement transversal du levier 4, donc sans risquer soit de faire intempestivement entrer en contact la collerette 27 avec la butée 29 et d'empêcher éventuellement le passage de rapports autres que la marche arrière, soit au contraire d'écarter la collerette 27 de la butée 29 au point de ne plus interdire le passage de la marche arrière quand le fourreau 26 est en position basse.

On comprend que le léger déplacement transversal, par rapport à la caisse du véhicule, de l'extrémité de la tige 5 ou 5A proche du levier 7 est autorisée soit, dans le cas de la Fig. 1, par un faible pivotement d'une part de la tige 5 autour du centre du palier souple 13 et d'autre part de la biellette verticale 14, soit, dans le cas de la Fig. 2, par un faible pivotement d'une part du tronçon 22 autour de l'axe vertical de la rotule 25 et d'autre part du tronçon 23 autour du centre du palier souple 13.

L'invention, sous sa forme de la Fig. 2, s'applique sans difficulté aux dispositifs de commande classiques à une seule tige logitudinale, c'est-à-dire dans lesquels la tige 5A est également montée coulissante et est reliée par une rotule au bras transversal 20 du levier de renvoi 8, près de son extrémité. Le palier 13 est alors remplacé par une rotule d'articulation du levier 4 située un peu au-dessus de l'axe transversal 11. Dans ce cas, les basulements transversaux du levier 4 provoquent comme précédemment la rotation de la tige 5A autour de son axe X-X, sans modification de la position du levier 8, et donc l'actionnement de l'élément 2 pour la sélection des rapports, et ses basulements logitudinaux déplacent en translation axiale la tige 5A, ce qui provoque uniquement le pivotement du levier 8 autour de son axe 18 et donc l'actionnement de l'élément 32 pour passer les vitesses. Dans un tel agencement, on relie comme précédemment la biellette 17 à l'extrémité avant de la tige 5A, et la rotule reliant cette tige au levier 8 joue le rôle de la rotule 25 de la Fig. 2. Comme à la Fig. 4, cette rotule, bien que mobile logitudinalement, peut avantageusement être coaxiale à l'articulation 24 entre les tronçon 22 et 23 de la tige 5A; elle remplit alors la triple fonction d'articulation entre les deux tronçons 22 et 23, d'organe permettant le déplacement transversal de l'extrémité avant de la tige 5A et de liaison entre cette tige et le levier 8.

## Revendications

1. Dispositif de commande de boîte de vitesses de véhicule automobile, du type comportant un levier de manoeuvre (4) relativement éloigné de la boîte de vitesses (1), porté par un palier (13) solidaire de la caisse du véhicule et relié par au moins une tige longitudinale (5, 6; 5A, 6) à deux éléments mobiles (2, 3) de la boîte de vitesses sur chacun desquels est articulée une biellette transversale (9, 10) attaquée par un levier de renvoi (7, 8) de façon que chaque rapport de la boîte de vitesses puisse être sélectionné par le premier élément mobile (2), puis engagé par le deuxième élément mobile (3), en basculant le levier de manoeuvre (4) d'abord en direction transversale puis en direction longitudinale, la tige (5; 5A) qui actionne le premier élément mobile (2) étant portée par la caisse du véhibule en deux points par l'intermédiaire de moyens de liaison (13, 14; 13, 25) permettant son pivotement autour de son axe (X-X) et éventuellement son coulissement longitudinal, caractérisé en ce que lesdits moyens de liaison (13, 14; 13, 25) permettent en outre un léger déplacement transversal de ladite tige (5; 5A) à son extrémité reliée au levier de renvoi (7) dudit premier élément mobile (2), et en ce que cette extrémité de la tige est en outre reliée à la boîte de vitesses par un tirant (17) sensiblement parallèle à la biellette de sélection (9) et à peu près de même logueur que celle-ci.

2. Dispositif de commande suivant la revendication 1, comprenant deux tiges longitudinales (5, 6) reliant respectivement le levier de manoeuvre (4) à chacun desdits éléments mobiles (2, 3), caractérisé en ce que lesdits moyens de liaison comprennent d'une part, de manière connue, un palier souple (13) proche du levier de manoeuvre et des moyens (15, 16) d'arrêt axial de ladite tige (5), et d'autre part une biellette (14) sensiblement perpendiculaire à cette tige et à la biellette de sélection (9) et articulée d'un côté sur la caisse et de l'autre côté sur cett tige en un point éloigné du palier (13).

3. Dispositif de commande suivant la revendication 1, comprenant deux tiges longitudinales (5A, 6) reliant respectivement le levier de manoeuvre (4) à chacun desdits éléments mobiles (2, 3), caractérisé en ce que lesdits moyens de liaison comprennent un palier souple (13) proche du levier de manoeuvre (4) et une articulation rotulante (25) solidaire de la caisse, la tige (5A) qui actionne le premier élément mobile (2) étant formée de deux tronçons (22, 23) s'articulant l'un sur l'autre autour d'un axe (24) sensiblement perpendiculaire à cette tige et à la biellette de sélection (9).

4. Dispositif de commande suivant la revendication 3, caractérisé en ce que l'articulation rotulante (25) est constituée d'un rotule solidaire d'un axe (18) d'articulation du levier de renvoi (8) correspondant à l'autre tige (6), cet axe étant solidaire de la caisse et sensiblement perpendiculaire à la première tige (5A).

5. Dispositif de commande suivant la revendication 1, à tige logitudinale unique reliée à deux éléments mobiles par des leviers de renvoi respectifs et par des biellettes transversales respectives, cette tige étant reliée par une articulation rotulante au levier de renvoi du deuxième élément mobile, levier qui est articulé sur un axe solidaire de la caisse et sensiblement perpendiculaire à la tige et aux biellettes, caractérisé en ce que la tige est formée de deux tronçons s'articulant l'un sur l'autre autour d'un axe sensiblement perpendiculaire à la tige et à la biellette de sélection.

6. Dispositif de commande suivant l'une quelconque des revendications 3 à 5, caractérisé en ce que l'axe (24) d'articulation des deux tronçons de tige (22, 23) est coaxial à l'articulation rotulante (25).

7. Dispositif de commande suivant la revendication 6, caractérisé en ce que l'articulation rotulante est constituée d'une rotule coopérant avec un logement (32) pratiqué dans un tourillon (31) solidaire d'un (22) des tronçons de tige et tournant dans un alésage (34) de l'autre tronçon de tige (23).

**Patentansprüche**

1. Verstelleinrichtung für Schaltgetriebe bei Kraftfahrzeugen mit einem relativ weit vom Getriebegehäuse (1) entfernten Schalthebel (4), der in einem mit dem Fahrzeuggehäuse verbundenen Lager (13) gelagert und mittels wenigstens einer längs verlaufenden Stange (5, 6; 5A, 6) mit zwei beweglichen Elementen (2, 3) des Getriebegehäuses verbunden ist, an denen wiederum jeweils ein quer verlaufender Schwenkarm (9, 10) angelenkt ist, an dem seinerseits ein Getriebehebel (7, 8) angreift, derart, daß jeder Gang des Getriebes durch das erste bewegliche Element (2) auswählbar und hierauf durch das zweite bewegliche Element (3) einlegbar ist, indem man den Schalthebel (4) zunächst in Quer- und dann in Längsrichtung verschwenkt, wobei die Stange (5; 5A), die das erste bewegliche Element (2) betätigt, am Fahrzeuggehäuse an zwei Stellen durch Verbindungsmittel (13, 14; 13, 25) gehaltert ist, welche ihre Verschwenkung um ihre Achse (X-X) und gegebenenfalls ihre Längsverschiebung gestatten, dadurch gekennzeichnet, daß die Verbindungsmittel (13, 14; 13, 25) außerdem eine leichte Querverschiebung der Stange (5; 5A) an ihrem mit dem Getriebehebel (7) des ersten beweglichen Elements (2) verbundenen Ende gestatten, und daß dieses Ende der Stange außerdem mit dem Getriebegehäuse durch einen Querriegel (17) verbunden ist, der im wesentlichen parallel zum Auswähl-Schwenkarm (9) verläuft und etwa dieselbe Länge wie dieser hat.

2. Verstelleinrichtung nach Anspruch 1 mit zwei längsverlaufenden Stangen (5, 6), die den Schalthebel (4) jeweils mit einem der beweglichen Elemente (2, 3) verbinden, dadurch gekennzeichnet, daß die Verbindungsmittel einerseits in an sich bekannter Weise ein nachgiebiges Lager (13) in der Nähe des Schalthebels und Mittel (15, 16) zur axialen Arretierung der Stange und andererseits einen Schwenkarm (14) umfassen, der im wesentlichen senkrecht zu dieser Stange und zum Auswähl-Schwenkarm (9) verläuft und auf einer Seite am Fahrzeuggehäuse und auf der anderen Seite an dieser Stange an einer vom Lager (13) entfernt liegenden Stelle angelenkt ist.

3. Verstelleinrichtungen nach Anspruch 1 mit zwei längsverlaufenden Stangen (5A, 6), die den Schalthebel (4) jeweils mit einem der beweglichen Elemente (2, 3) verbinden, dadurch gekennzeichnet, daß die Verbindungsmittel ein nachgiebiges Lager (13) in der Nähe des Schalthebels (4) und eine am Fahrzeuggehäuse befestigte Kugelgelenkverbindung (25) umfassen, wobei die Stange (5A), die das erste bewegliche Element (2) betätigt, aus zwei Teilstücken (22, 23) gebildet ist, die um eine Achse (24) schwenkbar gelenkig miteinander verbunden sind, und wobei diese Achse im wesentlichen senkrecht zu dieser Stange und dem Auswähl-Schwenkarm (9) verläuft.

4. Verstelleinrichtung nach Anspruch 3, dadurch gekennzeichnet, daß die Kugelgelenkverbindung (25) von einem fest mit einer Gelenkachse (18) des der anderen Stange (6) entsprechenden Getriebehebels (8) verbundenen Kugelgelenk gebildet ist, und diese Gelenkachse am Fahrzeuggehäuse befestigt ist sowie im wesentlichen senkrecht zur ersten Stange (5A) verläuft.

5. Verstelleinrichtung nach Anspruch 1 mit einer einzigen längs verlaufenden Stange, die durch Getriebehebel und durch quer verlaufende Schwenkarme mit zwei beweglichen Elementen verbunden ist, wobei diese Stange durch eine Kugelgelenkverbindung mit dem Getriebehebel des zweiten beweglichen Elements verbunden und dieser Hebel an einer Achse schwenkbar angelenkt ist, die am Fahrzeuggehäuse befestigt ist und im wesentlichen senkrecht zur Stange und zu den Schwenkarmen verläuft, dadurch gekennzeichnet, daß die Stange aus zwei Teilstükken besteht, und diese um eine Achse schwenkbar gelenkig miteinander verbunden sind, die im wesentlichen senkrecht zu der Stange und dem Auswähl-Schwenkarm verläuft.

6. Verstelleinrichtung nach einem der Ansprüche 3 bis 5, dadurch gekennzeichnet, daß die Gelenkachse (24) der beiden Stangenteilstücke (22, 23) koaxial zur Kugelgelenkverbindung (25) verläuft.

7. Verstelleinrichtung nach Anspruch 6, dadurch gekennzeichnet, daß die Kugelgelenkverbindung von einer Gelenkkugel gebildet ist, die mit einem in einem Drehzapfen (31) ausgebildeten Sitz (32) zusammenwirkt, und daß der Drehzapfen an einem (22) der Stangenteilstücke befestigt und in einer Bohrung (34) des anderen Stangenteilstücks (23) verdrehbar ist.

**Claims**

1. A control device for a motor vehicle gearbox of the type comprising a shifting lever (4) relatively remote from the gear-box (1), carried by a bearing (13) mounted on the body of the vehicle and connected by at least one logitudinal rod (5, 6; 5A, 6) to two moving elements (2, 3) of the gear-box to each of which is pivotally connected a transverse link (9, 10) driven by a crank (7, 8) in such manner that each ratio of the gear-box can be selected by the first moving element (2) and then engaged by the second moving element (3) by pivoting th shifting lever (4) first in a transverse direction and then in a logitudinal direction, the rod (5; 5A) which shifts the first moving element (2) being carried by the body of the vehicle at two points through connecting means (13, 14; 13, 25) permitting its pivoting about its axis (X-X) and possibly its longitudinal sliding, characterised in that said connecting means (13, 14; 13, 25) further permit a slight transverse displacement of said rod (5; 5A) at its end connected to the crank (7) of said first moving element (2), and this end of the rod is moreover connected to the gear-box through a rod (17) substantially parallel to the selecting link (9) and of roughly the same length as the latter.

2. A control device according to claim 1, comprising two longitudinal rods (5, 6) respectively connecting the shifting lever (4) to each of said moving elements (2, 3), characterised in that said connecting means comprise, on one hand, in the known manner, a flexible bearing (13) close to the shifting lever and means (15, 16) for axially stopping said rod (5), and, on the other hand, a link (14) substantially perpendicular to this rod and to the selecting link (9) and pivotally mounted at one end on the body and at the other end on this rod at a point remote from the bearing (13).

3. A control device according to claim 1, comprising two longitudinal rods (5A, 6) respectively connecting the shifting lever (4) to each of said moving elements (2, 3), characterised in that said connecting means comprise a flexible bearing (13) close to the shifting lever (4) and a swivelling articulation (25) formed by a ball connected to a pivot pin (18) of the crank (8) corresponding to the other rod, this pivot pin being connected to the body and substantially perpendicular to the first rod (5A).

4. A control device according to claim 3, characterised in that the swivelling articulation (25) is formed by a ball connected to a pin (18) pivotally connecting the corresponding crank (8) to the other rod (6), this pivot pin being connected to the body and substantially perpendicular to the first rod (5A).

5. A control device according to claim 1, comprising a single longitudinal rod connected to two moving elements through respective cranks and through respective transverse links, this rod being connected through a swivelling articulation to the crank of the second moving element, which crank is mounted to pivot about a pin connected to the body and substantially perpendicular to the rod and to the links, characterised in that the rod is formed by two sections pivotally connected together to pivot about an axis substantially perpendicular to the rod and to the selecting link.

6. A control device according to any one of the claims 3 to 5, characterised in that the pivot axis (24) of the two rod sections (22, 23) is coaxial to the swivelling articulation (25).

7. A control device according to claim 6, characterised in that the swivelling articulation is formed by a ball cooperative with a socket (32) provided in a journal (31) connected to one (22) of the rod sections and rotating in a bore (34) of the other rod section (23).

FIG.1

FIG.2

FIG. 3

0 084 472

FIG. 4

37

7A

22

33

23

31

32

34

25

35

24

5A

36

X

X

0 084 472